**Europäisches Patentamt**

**European Patent Office**

**Office européen des brevets**

(11) Veröffentlichungsnummer: **0 043 353**
A2

(12) # EUROPÄISCHE PATENTANMELDUNG

(21) Anmeldenummer: 81810265.9

(22) Anmeldetag: 29.06.81

(51) Int. Cl.³: **G 01 C 11/04**

(30) Priorität: 27.06.80 CH 4960/80

(43) Veröffentlichungstag der Anmeldung:
06.01.82 Patentblatt 82/1

(84) Benannte Vertragsstaaten:
DE FR IT

(71) Anmelder: **WILD HEERBRUGG AG.**

**CH-9435 Heerbrugg(CH)**

(72) Erfinder: **Zünd, Peter**
**Stockerstrasse 1o**
**CH-9436 Balgach(CH)**

(74) Vertreter: **Travnicek, Richard**
**c/o Wild Heerbrugg AG**
**CH-9435 Heerbrugg(CH)**

(54) Photogrammetrisches Auswertegerät.

(57) Photogrammetrisches Auswertegerät zur Auswertung von stereographischen Bildpaaren, bei welchem jeder Bildträger auf einem Kreuzwagenpaar angeordnet ist, wobei jeder Kreuzwagen eine Einrichtung zur Kompensation der in Abhängigkeit von einer Neigung gegen die waagrechte Lage an jedem Wagen angreifende Kraft vorgesehen ist, damit die Wagen und somit der Bildträger in jeder Lage im Gleichgewicht ist.

FIG.2

EP 0 043 353 A2

COMPLETE DOCUMENT

# STEREOPHOTOGRAMMETRISCHES AUSWERTEGERAET

Die Erfindung bezieht sich auf ein stereophotogrammetrisches Auswertegerät mit einem Kreuzwagenpaar und je einem darauf drehbar angeordneten Bildträger, jedes bestehend aus einem in einer x-Koordinatenrichtung verschiebbaren Bildwagen (x-Wagen), der von einem in einer y-Koordinatenrichtung verschiebbaren Zwischenwagen (y-Wagen) und dieser von einer auf dem Gerätegestell allseitig kippbaren Kipplatte getragen ist, wobei der Zwischenwagen (y-Wagen) für den Bildwagen (x-Wagen) und die Kipplatte für den Zwischenwagen (y-Wagen) jeweils einen Wagenträger bilden.

Die Wirkungsweise von stereophotogrammetrischen Auswertegeräten ist bekannt und in der Literatur beschrieben, z.B. in K.Schwidefsky und Ackermann "Photogrammetrie", Teubner Verlag Stuttgart, 1976.

Die Ebenen, auf welchen die Bildwagen verschiebbar sind, müssen in vielen Fällen zum Einrichten des Modells gegenüber einer horizontalen Ebene gekippt werden. Die beinahe reibunsfrei gelagerten Wagen erzeugen dann Verstellkräfte, die über die mechanischen Raumlenker auf den Modellwagen übertragen werden. Wenn der Modellwagen durch den Auswerter direkt geführt wird, d.h. wenn keine Antriebsspindeln oder andere Antriebsorgane vorhanden sind, muss der Modellwagen ständig gegen diese Kräfte geführt oder in seiner Lage festgehalten werden. Damit wird der Auswerter unnötig belastet und ermüdet leichter. Die Genauigkeit der Auswertung erreicht dadurch nicht die optimale Grösse.

In einigen Auswertegeräten werden die Verstellkräfte durch Gegengewichte oder elektronisch gesteuerte Motoren kompensiert. Bei der Kompensation durch Gegengewichte muss der Auswerter grosse Massen, d.h. die Wagen und die Gegengewichte bewegen. Gleichzeitig werden die Lager der beweglichen Teile durch das zusätzliche Gewicht der Gegengewichte belastet und müssen für die geforderte Genauigkeit grösser dimensioniert werden. Die Kompensation der Verstellkräfte durch Elektromotoren erfordert umfangreichere elektronische Regeleinrichtungen. Diese ergeben eine zusätzliche Störanfälligkeit der Geräte, insbesondere beim Einsatz in tropischen Klimaregionen. Die Aufgabe der Erfindung ist, ein stereophotogrammetrisches Auswertegerät zu schaffen, dessen Modellwagen von den Verstellkräften der gegen die waagrechte Ebene geneigten Bildwagensysteme weitgehend entlastet ist.

Die Aufgabe wird gelöst durch ein stereophotogrammetrisches Auswertegerät, bei dem an jedem Kreuzwagenpaar für jede der Koordinatenrichtungen (x, y) eine Einrichtung zur Kompensation der in Abhängigkeit von einer Neigung gegen die waagrechte Lage an jedem Wagen auftretende Kraft vorgesehen ist, welche jeweils einerseits mit einem Wagen und andererseits mit dessen Wagenträger in Wirkverbindung steht.

Insbesondere enthält die Kompensationseinrichtung ein verstellbares Hebelsystem, bestehend aus einer ersten Hebelgruppe und einer mit ihr zusammenwirkenden zweiten Hebelgruppe, sowie eine mit dieser verbundenen Feder, wobei diese auf den Wagen eine durch die einstellbare Geometrie des Hebelsystems regulierbare Kompensationskraft ausübt, die der entsprechenden Gewichtkomponente des Wagens bei einer Neigung aus der waagrechten Lage das Gleichgewicht hält.

Ausserdem soll die erste Hebelgruppe für den y-Wagen einen um einen Bolzen an der Kippplatte schwenkbaren ersten Führungshebel mit einer ersten Steuerkurve und einem an diesem Führungshebel angreifenden Stellhebel, der mit einer ersten Stellvorrichtung verbunden ist, aufweisen.

Weiter soll die erste Hebelgruppe für den x-Wagen einen um einen Bolzen am Bildwagen (x-Wagen) schwenkbaren zweiten Führungshebel mit einer zweiten Steuerkurve und einem an diesem angreifenden Stellhebel, der mit einer zweiten Stellvorrichtung verbunden ist, aufweisen.

Darüber hinaus kann jeder der Führungshebel ein Leitlineal sein und eine Gerade als Steuerkurve tragen oder aber eine Kurvenscheibe sein. Auch kann jeder der Führungshebel eine Kulissenführung für den Kompensationshebel aufweisen, wobei die Steuerkurve ein Teil dieser Kulissenführung ist.

Die zweite Hebelgruppe für den y-Wagen soll einen an diesem angelenkten und mit der am y-Wagen befestigten Feder verbundenen ersten Kompensationshebel aufweisen, der an der Steuerkurve des ersten Führungshebels mit einer Rolle anliegt.

Auch die zweite Hebelgruppe für den x-Wagen weist einen am y-Wagen angelenkten und mit der an diesem y-Wagen befestigten Feder verbundenen zweiten Kompensationshebel auf, der an der zweiten Steuerkurve des zweiten Führungshebels mit einer Rolle anliegt.

Dabei kann die Stellvorrichtung eine Stellschraube samt Mutter und Handrad oder Betätigungsknopf oder eine durch eine flexible Welle mit der zugeordneten Kipp-Stellschraube verbundene Stellschraube mit Mutter sein oder einen an der zugeordneten Kipp-Stellschraube sitzenden Winkelabgriff und einen mit der Stellschraube verbundenen motorischen Antrieb aufweisen, wobei diese Mittel an eine Steuereinrichtung angeschlossen sind.

Bei diesem Gerät kann die Feder eine Zugfeder mit einer linearen Kennlinie oder eine Rollfeder sein.

Weitere Merkmale des erfindungsgemässen Gerätes ergeben sich aus der Beschreibung einiger Ausführungsbeispiele anhand der schematischen Zeichnung.

In dieser zeigt

Fig. 1  eine Kreuzwagengruppe des erfindungsgemässen Gerätes in Vorderansicht in y-Richtung mit einer ersten Ausführungsform einer Kompensationseinrichtung

Fig. 2  die Kreuzwagengruppe nach Fig. 1 in Draufsicht

Fig. 3  eine Kreuzwagengruppe des erfindungsgemässen Gerätes in Vorderansicht in y-Richtung mit einer zweiten Ausführungsform einer Kompensationseinrichtung

Fig. 4   die Kreuzwagengruppe nach Fig. 3 in Draufsicht

Fig. 5   eine Kreuzwagengruppe des erfindungsgemässen Gerätes in Vorderansicht in y-Richtung mit einer
         dritten Ausführungsform einer Kompensationseinrichtung

Fig. 6   die Kreuzwagengruppe nach Fig. 5 in Draufsicht.


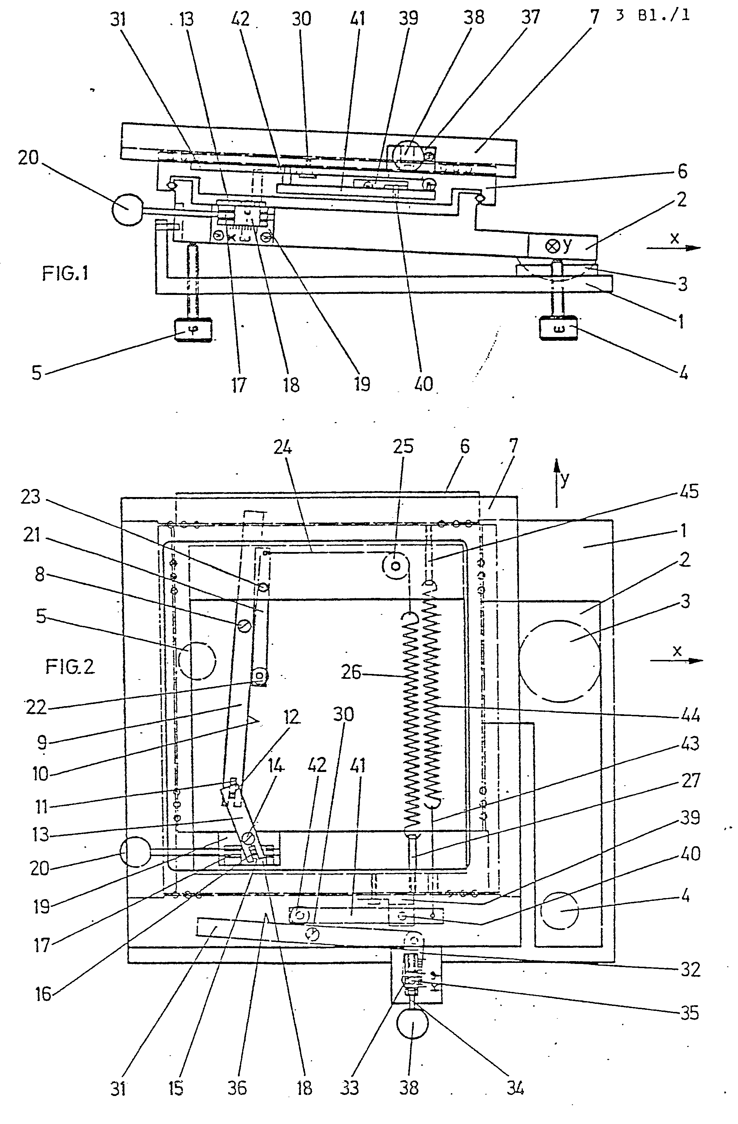

Bei dem photogrammetrischen Auswertegerät nach den Fig.1
und 2 trägt ein in den Figuren schematisch und vereinfacht dargestelltes Gerätegestell -1- ausser den üblicherweise in einem solchen Gerät enthaltenen Baugruppen wie
z.B. Raumlenker samt Aufhängung, Modellwagen usw. gemäss
der stereographischen Bildauswertung je zwei Bildträgergruppen, wobei sich die folgende Beschreibung auf nur
eine solche Bildträgergruppe beschränkt. Die zweite ist
im Gerät symmetrisch zur ersten angeordnet und gleichwirkend.


Auf dem Gerätegestell - 1 - ruht eine Kippplatte - 2 -
in einem Kugelschalenlager - 3 - und ist an zwei weiteren
Stellen, welche auf den Koordinatenachsen x bzw. y eines
durch den Scheitelpunkt der Kugelgelenkschale gelegten
x, y - Koordinatensystems liegen, durch je eine Kipp-
Stellschraube - 4   bzw.   5 - abgestützt. Mit der Kipp-
Stellschraube - 4 - wird die Querneigung $\omega$ und mit der
Kipp-Stellschraube - 5 - die Längsneigung $\varphi$ eingestellt.
Auf der Kippplatte - 2 - ist der in y-Richtung verschiebbare Zwischenwagen (y-Wagen) - 6 - gelagert auf dem der
Bildwagen (x-Wagen) - 7 - in x-Richtung verschiebbar gelagert ist.

Zwischen dem Bildwagen (x-Wagen) - 7 - und dem Zwischenwagen (y-Wagen) - 6 -, sowie zwischen dem Zwischenwagen - 6 - und der Kippplatte - 2 - ist je eine Einrichtung zur Kompensation der in Abhängigkeit von einer Neigung der Kippplatte - 2 - gegen die waagrechte Lage an jedem Wagen auftretende Kraft vorgesehen. Solche Neigungen sind erforderlich, um die Bildlagen auf den Bildträgern in die dem Aufnahmezeitpunkt entsprechende Fluglage der Filmebene in der im Flugzeug fest eingebauten Kamera zu bringen, um daraus das wirklichkeitsgetreue Modell rekonstruieren zu können.

Eine erste Kompensationseinrichtung, zwischen dem Zwischenwagen - 6 - und der Kippplatte - 2 -, weist einen um einen Bolzen - 8 -, welcher auf der Kippplatte - 2 - sitzt, schwankbaren, zweiarmigen, ersten Führungshebel - 9 - der an einer seiner Längsseiten eine erste Steuerkurve - 10 - trägt, auf. Diese erste Steuerkurve ist bei der vorliegenden Ausführungsform eine Gerade. Es ist jedoch z.B. für eine eventuelle Korrektur von Federkennlinien, von Steuereinrichtungen, usw. möglich, irgend eine Steuerkurve auf dem ersten Führungshebel - 9 - vorzusehen.

An seinem einen Ende besitzt der erste Führungshebel - 9 - einen Längsschlitz - 11 -, in welchen ein Stift - 12 - eines zweiarmigen Stellhebels - 13 - ragt. Dieser ist um einen auf der Kippplatte - 2 - sitzenden Bolzen - 14 - schwenkbar gelagert und weist an seinem anderen Ende einen Führungsschlitz - 15 - auf, in welchen ein Stift - 16 - einer auf einer Stellschraube - 17 - bewegbaren Mutter - 18 - eingreift. Die Stellschraube - 17 - ist in einer Konsole - 19 - unverschiebbar, drehbar ge-lagert und mit einem Handrad oder Betätigungsknopf - 20 -
verbunden.

An der Steuerkurve - 10 - des Führungshebels - 9 - liegt
eine auf einem zweiarmigen ersten Kompensationshebel
- 21 - drehbar gelagerte Rolle - 22 - auf. Der erste Kompensationshebel - 21 - ist um einen auf dem Zwischenwagen
(y-Wagen) - 6 - sitzenden Bolzen - 23 - schwenkbar. Am
zweiten Arm des ersten Kompensationshebels - 21 - ist ein
Seil - 24 - befestigt, welches über eine Umlenkrolle
- 25 - läuft und mit einem Ende einer ersten Zugfeder
- 26 - verbunden ist. Das andere Ende dieser ersten Zugfeder - 26 - hängt in der Oese eines Bolzens - 27 -, welcher im Zwischenwagen - 6 - sitzt.

Eine zweite Kompensationseinrichtung, zwischen dem Bildwagen (x-Wagen) - 7 - und dem Zwischenwagen (y-Wagen)
- 6 -, weist einen auf dem Bildwagen - 7 - um einen Bolzen - 30 - schwenkbar gelagerten zweiarmigen, zweiten
Führungshebel - 31 - auf, an dem ein zweiter Stellhebel
- 32 - angelenkt ist der auf einem auf einer Mutter - 33 -
einer zweiten Stellschraube - 34 - sitzenden Stift - 35 -
gelagert ist.

Der zweite Führungshebel - 31 - enthält an einer seiner
Seitenflächen eine zweite Steuerkurve - 36 -, die bei
dieser Ausführungsform eine Gerade ist, aber zum eventuellen Ausgleich anderer Einflussgrössen wie Federkennlinie, Steuereinrichtungen oder dergleichen eine beliebige andere Kurve sein kann. Die Stellschraube - 34 - ist
in einer mit dem Bildwagen (x-Wagen) - 7 - verbundenen
Konsole - 37 - gelagert und trägt an einem Ende einen
Betätigungsknopf - 38 - oder ein Handrad. Ein zweiter, aber auch zwischen der Kipp-Stellschraube - 4   bzw.   5 - und der flexiblen Welle - 47 - bzw.   48 - vorgesehen sein.

Auch ist es möglich anstelle eines Hebelgetriebes zwischen dem zweiten Führungshebel - 31 - und der zweiten Stellschraube - 34 - einen fest mit dem zweiten Führungshebel verbundenen Arm - 51 - anzuordnen, in welchen der Stift - 35 - der Mutter - 33 - eingreift.

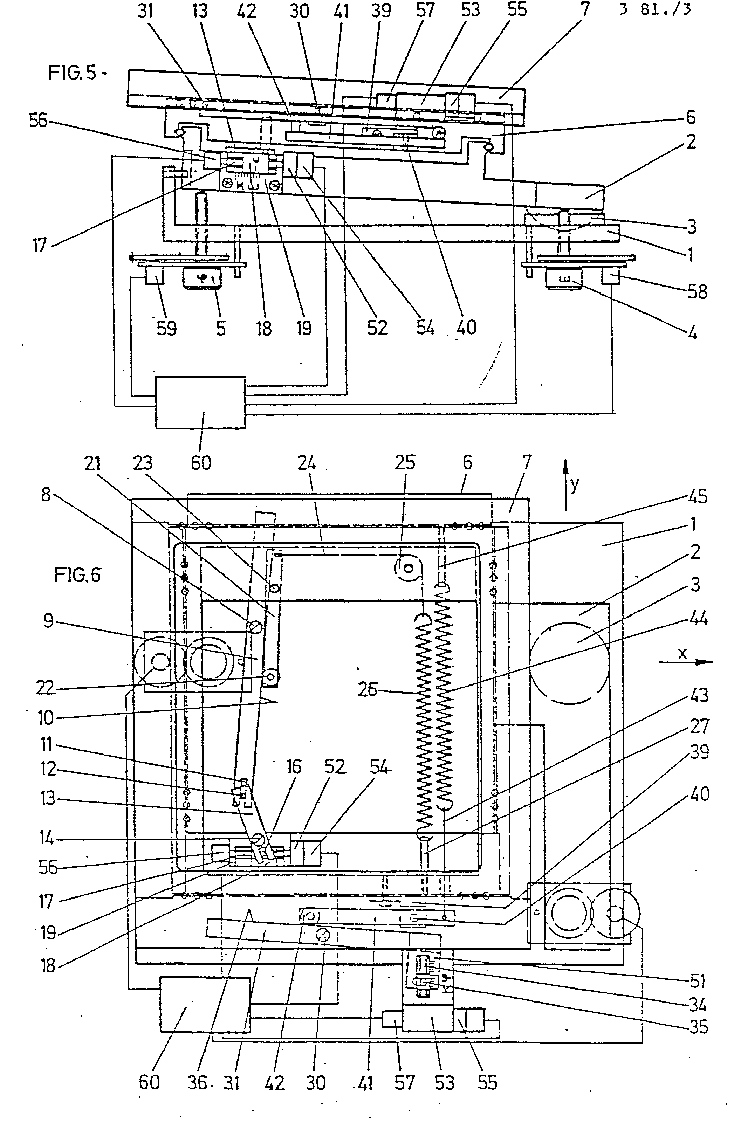

Das photogrammetrische Auswertegerät nach den Figuren 5 und 6 ist im wesentlichen gleich aufgebaut wie das Gerät nach den Figuren 1 und 2 bzw. 3 und 4. Eine Einrichtung zur Uebertragung einer Drehbewegung von je einer der Kipp-Stellschrauben-4 bzw. 5-zur ersten bzw. zweiten Stellschraube - 17   bzw.   34 - weist an jeder derselben ein Getriebe - 52  bzw.   55 - mit je einem angeschlossenen Motor - 54  bzw.   55 - auf. Mit dieser Motor-Getriebegruppe ist je ein Winkelgeber - 56   bzw.   57 - verbunden. Auch an Kipp-Stellschrauben - 4   bzw.   5 - sind Winkelgeber - 58   bzw.   59 - angeordnet. Die Winkelgeber und die Motoren sind mit einer zentralen Steuereinheit - 60 - elektrisch verbunden, wobei diese die Motoren nach den Verstelldaten der Kipp-Stellschrauben und den Rückmeldungen der Winkelgeberdaten an den Motoren steuert und so die gewünschte Verschwenkung der Führungshebel bewirkt.

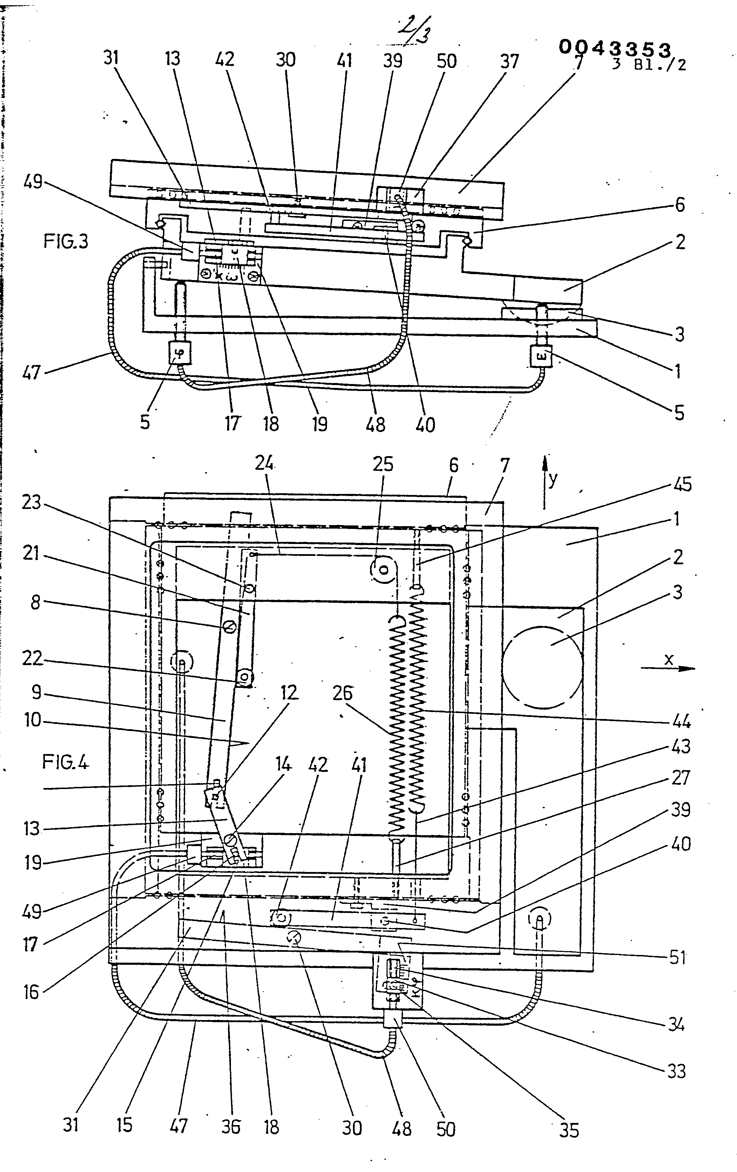

Die Wirkungsweise jeder der Kompensationseinrichtungen an jedem der drei Ausführungsbeispiele des erfindungsgemässen Gerätes ist gleich. Bei Verstellung der Kippplatte - 2 - durch z.B. die Kipp-Stellschraube - 5 - aus der waagrechten Lage entsteht für den Bildwagen (x-Wagen) - 7 - eine schiefe Ebene und ohne Betätigung der Kompensationseinrichtung würde der Bildwagen diese schiefe Ebene entlangrollen. Da er über die Raumlenker (nicht gezeichnet) des stereophotogrammetrischen Auswertegerätes mit dem Modellwagen (nicht gezeichnet) verbunden ist, würde dieser ebenfalls verschoben und müsste vom Operateur immer in seiner Lage gehalten werden, da meist solche Auslenkungen des Bildwagens aus der waagrechten Lage zum Ausgleich der Fluglage bei der Aufnahme erforderlich sind. Bei Betätigung der Kompensationseinrichtung für den x-Wagen wird, entweder von Hand (beim Gerät nach den Figuren 1 und 2) oder automatisch (bei den Geräten nach den Figuren 3 und 4 bzw. 5 und 6) der erste Führungshebel - 31 - in die in der Figur 2 gezeigte Stellung geschwenkt und dadurch eine von der Feder - 44 - herrührende Kraft auf diesen Führungshebel - 31 - von der Rolle - 42 - ausgeübt, sodass sich der diesen Führungshebel - 31 - tragende Bildwagen - 7 -, entsprechende Einstellung vorausgesetzt, nicht auf der schiefen Ebene abwärts verschiebt, denn die Feder hält der entsprechenden Gewichtskomponente das Gleichgewicht. In gleicher Weise funktioniert der Ausgleich einer Neigung zufolge Betätigung der Kipp-Stellschraube - 4 - auf den Zwischenwagen (y-Wagen).

Zur automatischen Verstellung der Kompensationseinrichtungen für die beiden Wagen kann auch ein Abgriff von geeignet an der Kippplatte - 2 - angebrachten Lineargebern mit entsprechend am Gerätegestell montierten Detektoren erfolgen und mittels einer Steuereinheit auf die zugeordneten Stellmotoren übertragen werden.

Für ganz exakten Ausgleich unter Berücksichtigung aller Systemkomponenten kann jeder der Führungshebel - 9 · bzw. 31 - eine Kurvenscheibe sein, wobei die Steuerkurve durch ihren Verlauf die Einflüsse dieser Systemkomponenten berücksichtigt.

Unter bestimmten Gegebenheiten kann eine Kulissenführung für den Kompensationshebel vorteilhaft sein.

18.6.80
775-Trv/de
80002/P

WILD HEERBRUGG AG                                          80002/P
CH-9435 Heerbrugg


PATENTANSPRUECHE


1. Stereophotogrammetrisches Auswertegerät mit einem Kreuzwagenpaar und je einem darauf drehbar angeordneten Bildträger, jedes Kreuzwagenpaar bestehend aus einem in einer x-Koordinatenrichtung verschiebbaren Bildwagen (x-Wagen), der von einem in einer y-Koordinatenrichtung verschiebbaren Zwischenwagen (y-Wagen) und dieser von einer auf einem Gerätegestell allseitig kippbaren Kippplatte getragen ist, wobei der Zwischenwagen für den Bildwagen und die Kipplatte für den Zwischenwagen jeweils einen Wagenträger bilden, d a - d u r c h   g e k e n n z e i c h n e t , dass an jedem Kreuzwagenpaar (6,7) für jede der Koordinatenrichtungen (x,y) eine Einrichtung (8 bis 27 bzw. 30 bis 46) zur Kompensation der in Abhängigkeit von einer Neigung gegen die waagrechte Lage an jedem Wagen auftretende Kraft vorgesehen ist, welche jeweils einerseits mit einem Wagen (7 bzw. 6), und andererseits mit dessen Wagenträger (6 bzw. 2) in Wirkverbindung steht.


2. Stereophotogrammetrisches Auswertegerät nach Anspruch 1, dadurch gekennzeichnet, dass die Kompensationseinrichtung ein verstellbares Hebelsystem (9, 13, 21, 22 bzw. 31, 32, 41, 42), bestehend aus einer ersten Hebelgruppe (9, 13 bzw. 31, 32) und einer mit ihr zusammenwirkenden zweiten Hebelgruppe (21, 22 bzw. 41, 42),

6. Stereophotogrammetrisches Auswertegerät nach einem der Ansprüche 3 oder 4, dadurch gekennzeichnet, dass der Führungshebel (9 oder 31) eine Kurvenscheibe ist.

7. Stereophotogrammetrisches Auswertegerät nach einem der Ansprüche 3 oder 4, dadurch gekennzeichnet, dass der Führungshebel (9 oder 31) eine Kulissenführung für den Kompensationshebel aufweist, wobei die Steuerkurve ein Teil dieser Kulissenführung ist.

8. Stereophotogrammetrisches Auswertegerät nach Anspruch 2, dadurch gekennzeichnet, dass die zweite Hebelgruppe (21, 22) für den y-Wagen (6) einen an diesem angelenkten und mit der am y-Wagen (6) befestigten Feder (26) verbundenen ersten Kompensationshebel (21) aufweist, der an der Steuerkurve (10) des ersten Führungshebels (9) mit einer Rolle (22) anliegt.

9. Stereophotogrammetrisches Auswertegerät nach Anspruch 2, dadurch gekennzeichnet, dass die zweite Hebelgruppe (41, 42) für den x-Wagen (7) einen am y-Wagen (6) angelenkten und mit der an diesem y-Wagen (6) befestigten Feder (44) verbundenen zweiten Kompensationhebel (41) aufweist, der an der zweiten Steuerkurve (36) des zweiten Führungshebels (31) mit einer Rolle (42) anliegt.

10. Stereophotogrammetrisches Auswertegerät nach einem der Ansprüche 3 oder 4, dadurch gekennzeichnet, dass jede der Stellvorrichtungen (15, 16, 17, 18, 19, 20 bzw. 33, 34, 35, 37, 38) eine Stellschraube (17 bzw. 34) mit Mutter (18 bzw. 33) und Betätigungsknopf (20 bzw. 38) ist.

0043353

— 4 —

11. Stereophotogrammetrisches Auswertegerät nach einem der Ansprüche 3 oder 4, dadurch gekennzeichnet, dass jede der Stellvorrichtungen eine durch eine flexible Welle (47 bzw. 48) mit der zugeordneten Kipp-Stellschraube (4 bzw. 5) verbundene Stellschraube (17 bzw. 34) mit Mutter (18 bzw. 33) ist.

12. Stereophotogrammetrisches Auswertegerät nach einem der Ansprüche 3 oder 4, dadurch gekennzeichnet, dass jede der Stellvorrichtungen einen an der zugeordneten Kipp-Stellschraube (4 bzw. 5) sitzenden Winkelabgriff (58 bzw. 59) und einen mit der Stellschraube (17 bzw. 34) verbundenen motorischen Antrieb (52, 54 bzw. 53, 55) aufweist, wobei diese Mittel an eine Steuereinrichtung (60) angeschlossen sind.

13. Stereophotogrammetrisches Auswertegerät nach Anspruch 2, dadurch gekennzeichnet, dass die Feder (26 bzw. 44) eine Zugfeder mit einer linearen Kennlinie ist.

14. Stereophotogrammetrisches Auswertegerät nach Anspruch 2, dadurch gekennzeichnet, dass die Feder (26 bzw. 44) eine Rollfeder ist.

18.6.80
775-Trv/de
80002/P

FIG.1

FIG.2

1/3

0043353

7 3 Bl./1

FIG.3

FIG.4

0043353
3 Bl./2

FIG.5

FIG.6

0043353
3 81./3